# EUROPÄISCHE PATENTSCHRIFT

(11) **EP 0 905 557 B1**
(45) Veröffentlichungstag und Bekanntmachung des Hinweises auf die Patenterteilung: **13.03.2002**
(21) Anmeldenummer: 98113274.9
(22) Anmeldetag: 16.07.1998
(51) Int. Cl.: G03B 27/70, G03B 27/68, G03B 27/72

(54) **Vorrichtung und Verfahren zum Abbilden von analogen und/oder digitalen Vorlagen auf lichtempfindliches Aufzeichnungsmaterial**
Apparatus and method for projecting analog and/or digital originals onto photosensitive recording material
Dispositif et procédé pour projeter des originaux analogiques et/ou digitaux sur du matériel d'enregistrement photosensible

(30) Priorität: 01.08.1997 DE 19733370
(43) Veröffentlichungstag der Anmeldung: 31.03.1999
(73) Patentinhaber: Agfa-Gevaert AG, 51373 Leverkusen (DE)
(72) Erfinder: Treiber, Helmut, Dr., 81479 München (DE); Jacob, Friedrich, 81247 München (DE)

(56) Entgegenhaltungen:
- EP-A- 0 308 967
- EP-A- 0 697 629
- EP-A- 0 738 910
- DE-A- 4 418 601
- DE-A- 19 623 835
- US-A- 5 432 580
- PATENT ABSTRACTS OF JAPAN vol. 097, no. 010, 31. Oktober 1997 -& JP 09 160140 A (FUJI PHOTO FILM CO LTD), 20. Juni 1997

## Beschreibung

Die Erfindung geht aus von einer Vorrichtung zum Abbilden von Vorlagen auf lichtempfindliches Material nach dem Oberbegriff des Anspruchs 1 bzw. des Anspruchs 2.

Eine entsprechende Vorrichtung zum Herstellen von Kopien von Vorlagen und zum Aufbelichten von Indexprints ist bereits aus der EP 0 308 967 A2 bekannt. Hier wird eine Reihe fotografischer Bilder auf fotosensitives Material kopiert. Nach dem Kopieren des letzten Bildes der Reihe wird ein Spiegel in den Strahlengang der integralen Kopierstation mechanisch eingeschwenkt, über den ein Indexprint auf dasselbe Band fotosensitiven Materials projiziert wird. Der Indexprint wird dabei mit einer CRT erzeugt.

Femer ist aus der nicht vorveröffentlichten DE 196 23 835 A1 ein fotografisches Kopiergerät bekannt, bei dem nach dem Kopieren einer Bilderreihe ein transmissives Anzeigeelement, z.B. ein LCD, in den Kopierstrahlengang eingeklappt wird, mit dem ein Indexprint auf das lichtempfindliche Aufzeichnungsmaterial belichtet wird. Hierzu wird die gleiche Lichtquelle wie zum Kopieren der Bilderreihe verwendet.

Das Umschalten von einer Belichtungsart auf die andere erfordert bei diesen bekannten Anordnungen viel Zeit, so daß nur geringe Kopierleistungen zustande kommen. Ebenfalls ist die Justage des Klappspiegels und des klappbaren LCDs sehr aufwendig und bedingt teure Schwenkmechanismen.

Die US 5,432,580 beschreibt ebenfalls ein fotografisches Kopiergerät mit zwei Belichtungssystemen, wobei mittels des einen Belichtungssystems fotografischer Film auf Fotopapier kopiert wird und das zweite Belichtungssystem zum Aufbelichten digitaler Bilder auf das Fotopapier verwendet wird. Um auf dieselbe Bühne für das Fotopapier wechselweise mit beiden Belichtungssystemen belichten zu können ist im Strahlengang des konventionellen Belichtungssystems ein halbdurchlässiger Spiegel oder Strahlteiler angeordnet, über den der Strahlengang des zweiten Belichtungssystems eingespiegelt wird. Dadurch können mechanische Schwenkmechanismen zum Umschalten zwischen den beiden Strahlengängen vermieden werden. Nachteilig ist jedoch, daß Strahlteiler im Strahlengang eines konventionellen Belichtungssystems hohe Lichtverluste zur Folge haben. Da in Hochleistungsprintem jedoch eine sehr hohe Lichtintensität benötigt wird, um beim Kopieren der Filme auf das fotografische Material kurze Belichtungszeiten zu realisieren, ist das Einbringen von teildurchlässigen Strahlteilern in den Kopierstrahlengang nicht sinnvoll.

Die JP 09160140 A beschreibt einen fotografischen Printer, bei dem das Licht einer Lichtquelle mittels eines DMDs modifiziert wird, bevor es auf den zu kopierenden Film geleitet wird. Die Modifikation des Kopierlichts dient einer Reduktion des Kontrastumfangs beim Kopieren des Films auf Fotopapier in einer konventionellen Belichtungsstation. So wird ermöglicht, beim Kopieren von fotografischem Film auf Fotopapier digitale Bilddaten durch Modifikation des Kopierlichts mit zu berücksichtigen. Hierdurch kann beispielsweise eine Reduktion des Kontrastumfangs beim Kopieren des Filmes auf das Fotopapier vorgenommen werden. Bei dieser Anordnung ist es jedoch nicht möglich, digitale Bilder separat einzubelichten, falls sich noch fotografischer Film im Strahlengang befindet. Da sich bei Hochleistungsprintern jedoch immer fotografischer Film oder Leaderband im Kopierstrahlengang befindet, ist diese Anordnung ungeeignet zum Aufbelichten von wahlweise konventionellen oder digitalen Bildern.

Die EP 0 697 629 A1 beschreibt ein Verfahren zum Erzeugen von Indexprints mit einem fotografischen Printer. Hier wird der Indexprint abschnittsweise erzeugt, indem ein Indexprint-Objektiv, welches das fotografische Bild verkleinert auf das Fotopapier abbildet, in verschiedene Belichtungspositionen bewegt wird. Mittels einer LCD- oder LED-Matrix können zusätzlich veränderliche Daten wie Filmidentifikationsnummer oder Tagesdatum über das bewegliche Indexprint-Objektiv einbelichtet werden. Ein derartiges Verfahren zur Erzeugung von Indexprints ist jedoch sehr langsam, da mehrere Belichtungsschritte notwendig sind, bis aus den abschnittweisen Kopien ein vollständiger Indexprint zusammengesetzt ist.

Aus der DE-OS 44 18 601 ist ein fotografisches Kopiergerät bekannt, das zwei Kopierstationen aufweist, welche in Bandlaufrichtung versetzt nacheinander auf dasselbe Materialband Kopien und Indexprints aufbelichten. Nachteilig ist dabei, daß zwei Bühnen für das Aufzeichnungsmaterial notwendig sind und daß die Belichtungsbereiche, auf die die Kopien und Indexprints aufbelichtet werden, sehr genau aufeinander abgestimmt werden müssen. Hierfür ist ein recht aufwendiges zusätzliches Verfahren notwendig, in dem die Länge des Aufzeichnungsmaterials kontrolliert wird.

Es war daher Aufgabe der Erfindung, eine entsprechende zum Abbilden von Vorlagen auf lichtempfindliches Aufzeichnungsmaterial zu entwickeln, die ein einfaches und zuverlässiges Abbilden von digitalen und analogen Vorlagen auf das Aufzeichnungsmaterial ermöglicht, ohne die Kopierleistung für analoge Vorlagen zu beeinträchtigen. Durch einen schnellen Wechsel der digitalen und integralen Belichtung soll eine hohe Kopierleistung erzielt werden.

Erfindungsgemäß werden digitales und integrales Belichtungssystem so aufgebaut und angeordnet, daß bei der Aufbelichtung des generierten digitalen Bildes der Strahlengang des integralen Belichtungssystems nicht beeinträchtigt wird. Das wird dadurch gewährleistet, daß die Bildgeneriereinrichtung des digitalen Belichtungssystems sich außerhalb des Strahlengangs des integralen Belichtungssystems befindet und das digitale Belichtungssystem so aufgebaut und angeordnet ist, daß es die digitale Vorlage formatfüllend auf das Aufzeichnungsmaterial auf der Bühne abbildet. Vorteilhafterweise ist ein Objektiv zum Abbilden des digitalen Belichtungssystems zwischen Bildgeneriereinrichtung und lichtempfindlichem Material so positioniert, daß die durch die Bildgeneriereinrichtung gebildete Objektebene, die Hauptebene des Objektivs und die durch das Aufzeichnungsmaterial gebildete Bildebene parallel zueinander sind. Alternativ sind Objektiv und Bildgeneriereinrichtung schräg zum Aufzeichnungsmaterial so angeordnet, daß die Scheimpflug-Bedingung erfüllt ist. Auf diese Weise kann zwischen digitaler und integraler Belichtung umgeschaltet werden, ohne daß mechanische Bauteile bewegt werden müssen. So können beispielsweise in einem fotografischen Kopiergerät sofort nach der Aufbelichtung der fotografischen Bilder auf das lichtempfindliche Aufzeichnungsmaterial die elektronischen Bildsignale für den Indexprint auf derselben Papierbühne aufbelichtet werden. Eine solche Anordnung bietet aber auch die Möglichkeit, elektronische Bilddaten wie Schriftzüge o. ä. direkt gleichzeitig mit dem analogen Bild auf das lichtempfindliche Aufzeichnungsmaterial zu projizieren. Eine weitere Möglichkeit ist es, die analogen Bilder einzuscannen, die elektronischen Bilddaten dann zu modifizieren und so z. B. eine Maskierung zu erzeugen, die über das digitale Belichtungssystem einbelichtet wird und eine Veränderung des Kontrastes oder der Farbgebung bewirkt. Bei der Modifikation der digitalen Daten sind noch viele weitere Arten möglich.

Das digitale Bild kann erfindungsgemäß mittels eines von einer Steuereinrichtung pixelweise ansteuerbaren, Lichtmodulators gebildet werden. Der Lichtmodulator kann reflektierend oder auch transmissiv sein. Es können DMDs (Digital Micromirror Device, wie z.B. in der EP-OS 07 38 910 beschrieben), LCDs, FLCDs oder auch PLZTs wie auch alle anderen pixelweise ansteuerbaren Lichtmodulatoren verwendet werden. Besonders vorteilhaft sind DMDs, da diese sehr hell sind und sich sehr schnell schalten lassen. Dies reduziert die notwendige Belichtungszeit und ermöglicht so eine hohe Kopierleistung. Aufgrund des geringen Lichtverlustes bei der Verwendung von DMDs können als Beleuchtungseinrichtung LEDs benutzt werden. Diese haben den Vorteil, daß sie ebenso wie die DMDs schnell zu schalten sind. So können sie zwischen den Belichtungen schnell abgeschaltet werden, um den Einfall von Streulicht zu vermeiden, so daß keine zusätzlichen Verschlußeinrichtungen notwendig sind, die bei langsamer schaltenden Beleuchtungseinrichtungen eingesetzt werden müssen. Außerdem macht ihre lange Lebensdauer die LEDs zu besonders vorteilhaften Beleuchtungseinrichtungen.

Werden dagegen transmissive Lichtmodulatoren verwendet, so ist es vorteilhafter, lichtstärkere Beleuchtungseinrichtungen wie Halogen- oder Glühlampen zu verwenden, da die transmissiven Lichtmodulatoren einen Großteil des Lichtes absorbieren.

Eine weitere Ausgestaltungsmöglichkeit der Erfindung sieht vor, als Bildgeneriereinrichtung eine CRT oder ein LED-Array zu verwenden.

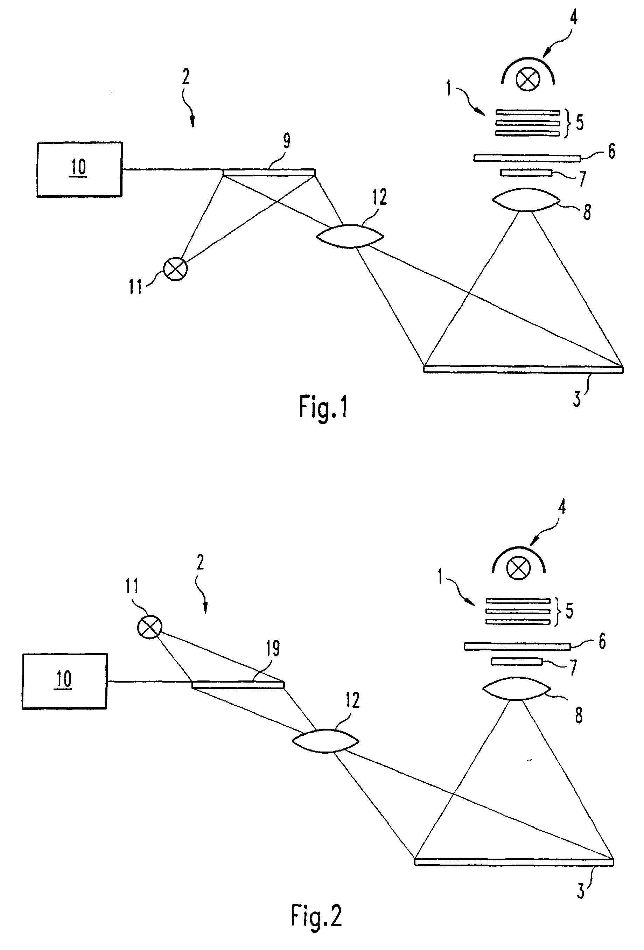

Das Bild, das von der Bildgeneriereinrichtung erzeugt wird, wird von einem Objektiv auf das lichtempfindliche Aufzeichnungsmaterial abgebildet. Üblicherweise stehen dabei Bildgeneriereinheit und lichtempfindliches Material, welche Objekt-und Bildebene bilden, parallel zueinander, um eine scharfe, unverzerrte Abbildung zu gewährleisten. Dabei werden aber nur Strahlen abgebildet, die durch einen kleinen Randbereich des Objektivs gehen, die optische Achse des Objektivs wird nicht genutzt, wie in Fig. 1 zu sehen ist. Um die optische Achse des Objektivs zu nutzen, muß dieses schräg zur Bildebene gestellt werden. Die Bildgeneriereinrichtung wird dann so angeordnet, daß die Scheimpflug-Bedingung erfüllt ist, damit sich ein scharfes Bild auf dem Aufzeichnungsmaterial ergibt. Um bei dieser Anordnung ein unverzerrtes Bild zu erhalten, muß die digitale Vorlage so vorverzerrt werden, daß die Verzerrung durch die Abbildung mit dem Objektiv ausgeglichen wird.

Diese Vorverzerrung kann erfolgen indem die elektronischen Bilddaten in einem Rechner so modifiziert werden, daß die Steuereinrichtung auf der Bildgeneriereinrichtung ein entsprechend vorverzerrtes Bild erzeugt.

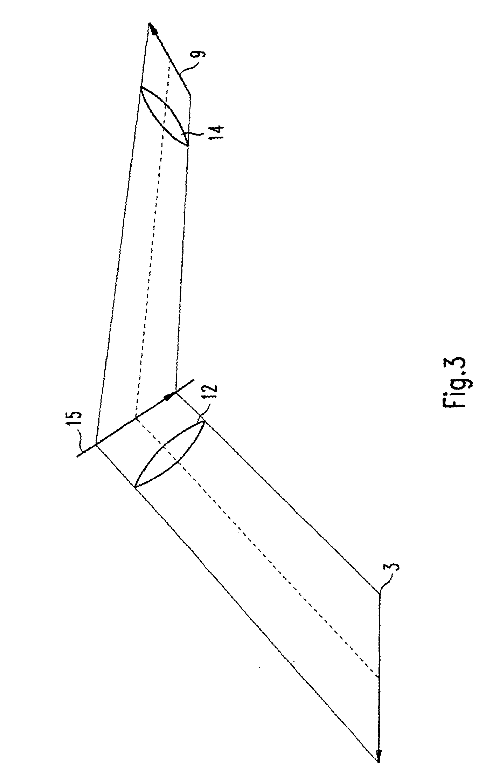

Die Korrektur der Verzerrung kann - wie in Fig. 3 dargestellt - auch optisch erfolgen, indem eine weitere Abbildungsoptik vor das Objektiv eingebracht wird, die ein entsprechend vorverzerrtes Zwischenbild erzeugt, so daß bei der anschließenden Abbildung durch das Objektiv wieder eine unverzerrte Wiedergabe der Vorlage entsteht. Es kann entweder ein virtuelles oder ein reelles Zwischenbild auf einer Mattscheibe erzeugt werden. Zusätzlich in den Strahlengang eingebrachte Feldlinsen erhöhen die Helligkeit.

Weitere Einzelheiten und Vorteile der Erfindung ergeben sich aus den Unteransprüchen im Zusammenhang mit der Beschreibung von Ausführungsbeispielen, die im folgenden anhand von Figuren eingehend erläutert sind.

Es zeigen:
- Fig. 1: den schematischen Aufbau einer erfindungsgemäßen Belichtungsvorrichtung mit einem DMD,
- Fig. 2: den schematischen Aufbau einer erfindungsgemäßen Belichtungsvorrichtung mit einem LCD,
- Fig. 3: den Ausschnitt eines Strahlengangs,
- Fig. 4: einen Ausschnitt aus dem schematischen Aufbau einer erfindungsgemäßen Belichtungsvorrichtung, wobei das digitale Belichtungssystem so angeordnet ist, daß die Scheimpflug-Bedingung erfüllt ist.

Die in Fig. 1 dargestellte Belichtungsvorrichtung von lichtempfindlichem Aufzeichnungsmaterial weist ein integrales Belichtungssystem 1, ein digitales Belichtungssystem 2 sowie eine Bühne 3 auf. Bei dem integralen Belichtungssystem 1 wird das Licht einer Halogenlampe 4 durch Farbfilter 5 und eine Streufolie 6 auf eine Bildvorlage 7 gestrahlt, von der aus das Bild über ein Objektiv 8 auf das auf der Bühne 3 befindliche, lichtempfindliche Aufzeichnungsmaterial aufbelichtet wird. Bei dem digitalen Belichtungssystem 2 wird anhand der elektronischen Bilddaten der digitalen Bildvorlage das Bild auf einem Lichtmodulator 9 erzeugt, der von einer Steuereinrichtung 10 angesteuert und von einer LED-Beleuchtungseinrichtung 11 beleuchtet wird. Das Objekt wird anschließend mit einem Objektiv 12 auf das lichtempfindliche Material projiziert, das sich auf derselben Papierbühne 3 befindet, auf der bereits das analoge Bild aufbelichtet wurde. Bei dem Lichtmodulator 9 handelt es sich bei der dargestellten Anordnung um ein reflektierendes Anzeigeelement, wie beispielsweise ein DMD. In der dargestellten Anordnung stehen DMD 9, Hauptebene des Objektivs 12 und Bühne 3 parallel zueinander. Dadurch wird für die Abbildung nur ein kleiner Randbereich des Objektivs 12 ausgenutzt.

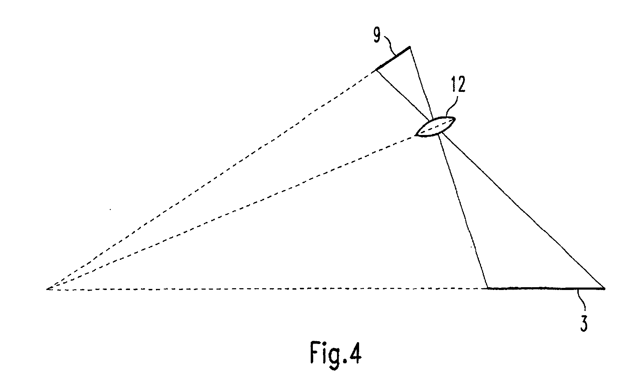

Um die optische Achse des Objektivs 12 zu nutzen, muß dieses schräg zur Bühne 3 gestellt werden. Ein entsprechender Aufbau ist in Fig. 4 dargestellt. Das DMD muß dann so angeordnet und ausgerichtet werden, daß das DMD, das Objektiv und die Bühne 3 die Scheimpflug-Bedingung erfüllen. Femer muß das digitale Bild auf dem DMD vorverzerrt so erzeugt werden, daß auch bei der Abbildung durch das schräggestellte Objektiv eine unverzerrte Wiedergabe der Vorlage entsteht.

Fig. 2 zeigt eine erfindungsgemäße Belichtungsvorrichtung, bei der als Lichtmodulator ein transmissives Anzeigeelement 19 vorgesehen ist. Dieses kann beispielsweise ein LCD oder auch ein PLZT sein. Die in Fig. 1 und Fig. 2 dargestellten Anordnungen unterscheiden sich in Positionierung und Art der Beleuchtungseinheit des Lichtmodulators. Für die Beleuchtung der transmissiven Lichtmodulatoren müssen lichtstärkere Beleuchtungseinrichtungen wie Halogenlampen verwendet werden, da hier bei der Durchstrahlung des ansteuerbaren Lichtmodulators sehr viel Licht verlorengeht.

Fig. 3 zeigt einen Ausschnitt eines Strahlengangs mit einer vorverzerrenden Abbildungsoptik, die zwischen Abbildungsobjektiv 12 und DMD 9 positioniert ist. Zur Erzeugung der Vorverzerrung sind ein weiteres Objektiv 14 und eine Mattscheibe 15 vorgesehen. Das Bild, das auf dem DMD 9 erzeugt wird, wird von dem Objektiv 14 verzerrt als reelles Zwischenbild auf einer Mattscheibe 15 abgebildet. Die Anordnung von DMD 9, Optik 14 und Mattscheibe 15 ist so gewählt, daß die Verzerrung des Zwischenbildes dem Umgekehrten der Verzerrung durch die folgende Anordnung aus Mattscheibe 15, Optik 12 und Bühne 3 entspricht. Das Objektiv 12 bildet das Zwischenbild dann so auf das Aufzeichnungsmaterial auf der Bühne 3 ab, daß eine unverzerrte Kopie der Vorlage entsteht.

## Patentansprüche

1. Vorrichtung zum Kopieren von Bildvorlagen (7) auf lichtempfindliches Aufzeichnungsmaterial mit einer Bühne (3) für das Aufzeichnungsmaterial, wobei ein integrales Belichtungssystem (1) mit einer Beleuchtungseinheit (4,5,6) und einem Vorlagenträger, ein digitales Belichtungssystem (2) mit einer Bildgeneriereinrichtung (9,10,11) und ein Objektiv (12) zum Abbilden des digitalen Belichtungssystems (2) vorgesehen ist und wobei die Bildgeneriereinrichtung (9,10,11) des digitalen Belichtungssystems (2) außerhalb des Strahlengangs des integralen Belichtungssystems (1) so angeordnet ist, daß durch die Bildgeneriereinrichtung (9,10,11) ein Bild formatfüllend auf das auf der Bühne (3) positionierte, unbelichtete Aufzeichnungsmaterial abbildbar ist, wobei bei einem Wechsel von einem Belichtungssystem auf das andere die beiden Strahlengänge unverändert bleiben, **dadurch gekennzeichnet, daß** das Objektiv (12) zwischen Bildgeneriereinrichtung (9,10,11) und lichtempfindlichem Aufzeichnungsmaterial positioniert ist, wobei die Objektebene durch die Bildgeneriereinrichtung (9) und die Bildebene durch das Aufzeichnungsmaterial gebildet wird und Objektebene, Hauptebene des Objektivs und Bildebene parallel zueinander angeordnet sind.

2. Vorrichtung zum Kopieren von Bildvorlagen (7) auf lichtempfindliches Aufzeichnungsmaterial mit einer Bühne (3) für das Aufzeichnungsmaterial, wobei ein integrales Belichtungssystem (1) mit einer Beleuchtungseinheit (4,5,6) und einem Vorlagenträger, ein digitales Belichtungssystem (2) mit einer Bildgeneriereinrichtung (9,10,11) und ein Objektiv (12) zum Abbilden des digitalen Belichtungssystems (2) vorgesehen ist und wobei die Bildgeneriereinrichtung (9,10,11) des digitalen Belichtungssystems (2) außerhalb des Strahlengangs des integralen Belichtungssystems (1) so angeordnet ist, daß durch die Bildgeneriereinrichtung (9,10,11) ein Bild formatfüllend auf das auf der Bühne (3) positionierte, unbelichtete Aufzeichnungsmaterial abbildbar ist, wobei bei einem Wechsel von einem Belichtungssystem auf das andere die beiden Strahlengänge unverändert bleiben, **dadurch gekennzeichnet, daß** das Objektiv (12) zwischen Bildgeneriereinrichtung (9,10,11) und lichtempfindlichem Aufzeichnungsmaterial positioniert ist, wobei die Objektebene durch die Bildgeneriereinrichtung (9) und die Bildebene durch das Aufzeichnungsmaterial gebildet wird, die optische Achse des Objektivs (12) mit der Bildebene einen Winkel ungleich 90° einschließt und die Orientierung der Objektebene die Scheimpflug-Bedingung erfüllt.

3. Vorrichtung nach Anspruch 1 oder 2, **dadurch gekennzeichnet, daß** die Bildgeneriereinrichtung des digitalen Belichtungssystems einen Lichtmodulator (9) mit einer Steuereinrichtung (10) aufweist.

4. Vorrichtung nach Anspruch 3, **dadurch gekennzeichnet, daß** ein reflektierender Lichtmodulator (9), insbesondere ein DMD, verwendet wird.

5. Vorrichtung nach Anspruch 3, **dadurch gekennzeichnet, daß** ein transmissiver Lichtmodulator (9), insbesondere ein LCD, verwendet wird.

6. Vorrichtung nach Anspruch 4 oder 5, **dadurch gekennzeichnet, daß** zur Beleuchtung des Lichtmodulators (9) LEDs vorgesehen sind.

7. Vorrichtung nach Anspruch 4 oder 5, **dadurch gekennzeichnet, daß** zur Beleuchtung des Lichtmodulators (9) eine Halogenlampe mit Farbfiltern vorgesehen ist.

8. Vorrichtung nach Anspruch 1 oder 2, **dadurch gekennzeichnet, daß** die Bildgeneriereinrichtung (9,10,11) als CRT oder LED-Array ausgebildet ist.

9. Vorrichtung nach Anspruch 3, **dadurch gekennzeichnet, daß** die Steuereinrichtung (10) des Lichtmodulators (9) einen Rechner aufweist, der eine digitale Vorlage so modifiziert, daß auf dem Lichtmodulator (9) ein verzerrtes Bild generiert wird, wobei die Verzerrung so gestaltet ist, daß bei der Abbildung dieses Bildes auf dem lichtempfindlichen Aufzeichnungsmaterial eine unverzerrte Wiedergabe der Vorlage entsteht.

10. Vorrichtung nach Anspruch 2, **dadurch gekennzeichnet, daß** zwischen der Bildgeneriereinrichtung (9,10,11) und dem Objektiv (12) eine weitere Abbildungsoptik (14) angeordnet ist, die ein in der Weise vorverzerrtes Zwischenbild erzeugt, daß bei der Abbildung des Zwischenbildes durch das Objektiv (12) auf dem lichtempfindlichen Aufzeichnungsmaterial eine unverzerrte Wiedergabe der Vorlage entsteht.

11. Vorrichtung nach Anspruch 10, **dadurch gekennzeichnet, daß** als Zwischenbild ein virtuelles Zwischenbild erzeugt wird.

12. Vorrichtung nach Anspruch 10, **dadurch gekennzeichnet, daß** eine Mattscheibe (15) zwischen der zusätzlichen Abbildungsoptik (14) und dem Objektiv (12) vorgesehen ist, auf der ein reelles Zwischenbild erzeugt wird.

## Claims

1. Device for copying image originals (7) on to a light-sensitive recording medium with a platform (3) for the recording medium, an integral exposure system (1) with a lighting unit (4, 5, 6) and an original carrier, a digital exposure system (2) with an image generating apparatus (9, 10, 11) and a lens system (12) for displaying the digital exposure system (2) being provided and the image generating apparatus (9, 10, 11) of the digital exposure system (2) being arranged outside the beam path of the integral exposure system (1) in such a way that an image can be displayed by the image generating apparatus (9, 10, 11) so as to fill the format on the unlit recording material positioned on the platform (3), the two beam paths remaining unchanged in the case of a change from one exposure system to the other, **characterised in that** the lens system (12) is positioned between the image generating apparatus (9, 10, 11) and light-sensitive recording medium, the plane of the lens system being formed by the image generating apparatus (9) and the image plane being formed by the recording medium and the lens system plane, main plane of the lens system and image plane being arranged parallel to one another.

2. Device for copying image originals (7) on to light-sensitive recording medium with a platform (3) for the recording medium, an integral exposure system (1) with a lighting unit (4, 5, 6) and an original carrier, a digital exposure system (2) with an image generating apparatus (9, 10, 11) and a lens system (12) for displaying the digital exposure system (2) being provided and the image generating apparatus (9, 10, 11) of the digital exposure system (2) being arranged outside the beam path of the integral exposure system (1) in such a way that an image can be displayed by the image generating apparatus (9, 10, 11) so as to fill the format on the unlit recording material positioned on the platform (3), the two beam paths remaining unchanged in the case of a change from one exposure system to the other, **characterised in that** the lens system (12) is positioned between the image generating apparatus (9, 10, 11) and light-sensitive recording medium, the plane of the lens system being formed by the image generating apparatus (9) and the image plane being formed by the recording medium, the optical axis of the lens system (12) enclosing an angle with the image plane which does not equal 90° and the orientation of the lens system plane fulfilling the Scheimpflug condition.

3. Device according to claim 1 or 2, **characterised in that** the image generating apparatus of the digital exposure system has a light modulator (9) with a control apparatus (10).

4. Device according to claim 3, **characterised in that** a reflecting light modulator (9), in particular a DMD, is used.

5. Device according to claim 3, **characterised in that** a transmissive light modulator (9), in particular an LCD, is used.

6. Device according to claim 4 or 5, **characterised in that** LEDs are provided for lighting the light modulator (9).

7. Device according to claim 4 or 5, **characterised in that** a halogen lamp with colour filters is provided for lighting the light modulator (9).

8. Device according to claim 1 or 2, **characterised in that** the image generating apparatus (9, 10, 11) is designed as a CRT or LED array.

9. Device according to claim 3, **characterised in that** the control apparatus of the light modulator (9) has a computer which modifies a digital original in such a way that a distorted image is generated on the light modulator (9), the distortion being formed in such a way that when displaying this image on the light-sensitive recording medium an undistorted reproduction of the original is produced.

10. Device according to claim 2, **characterised in that**, arranged between the image generating apparatus (9, 10, 11) and the lens system (12) is a further display lens system (14) which produces a pre-distorted intermediate image in such a way that when the intermediate picture is displayed by the lens system (12) on the light-sensitive recording medium an undistorted reproduction of the original is produced.

11. Device according to claim 10, **characterised in that** a virtual intermediate image is produced as an intermediate image.

12. Device according to claim 10, **characterised in that** a ground glass screen (15) is provided between the additional display lens system (14) and the lens system (12), on which a real intermediate image is produced.

## Revendications

1. Dispositif pour copier des originaux (7) sur un matériau d'enregistrement photosensible avec un plateau (3) pour le matériau d'enregistrement, dans lequel il est prévu un système d'exposition à la lumière (1) intégral avec une unité d'éclairage (4, 5, 6) et avec un porte-original, un système d'exposition à la lumière (2) numérique avec un dispositif de génération d'image (9, 10, 11) et un objectif (12) pour la projection du système d'exposition à la lumière (2) numérique, dans lequel le dispositif de génération d'image (9, 10, 11) du système d'exposition (2) numérique est placé en dehors du trajet des rayons du système d'exposition (1) intégral de telle sorte qu'une image peut être projetée par le dispositif de génération d'image (9, 10, 11) sur le matériau d'enregistrement, positionné sur le plateau (3) et non éclairé, en en remplissant tout le format et dans lequel, lors d'un changement d'un système d'exposition à l'autre, les deux trajets de rayons restent inchangés, **caractérisé en ce que** l'objectif (12) est positionné entre le dispositif de génération d'image (9, 10, 11) et le matériau d'enregistrement photosensible, le plan d'objet étant formé par le dispositif de génération d'image (9), le plan d'image étant formé par le matériau d'enregistrement et le plan d'objet, le plan principal de l'objectif et le plan d'image étant parallèles les uns aux autres.

2. Dispositif pour copier des originaux (7) sur un matériau d'enregistrement photosensible avec un plateau (3) pour le matériau d'enregistrement, dans lequel il est prévu un système d'exposition à la lumière (1) intégral avec une unité d'éclairage (4, 5, 6) et avec un porte-original, un système d'exposition à la lumière (2) numérique avec un dispositif de génération d'image (9, 10, 11) et un objectif (12) pour la projection du système d'exposition à la lumière (2) numérique, dans lequel le dispositif de génération d'image (9, 10, 11) du système d'exposition (2) numérique est placé en dehors du trajet des rayons du système d'exposition (1) intégral de telle sorte qu'une image peut être projetée par le dispositif de génération d'image (9, 10, 11) sur le matériau d'enregistrement, positionné sur le plateau (3) et non éclairé, en en remplissant tout le format et dans lequel, lors d'un changement d'un système d'exposition à l'autre, les deux trajets de rayons restent inchangés, **caractérisé en ce que** l'objectif (12) est positionné entre le dispositif de génération d'image (9, 10, 11) et le matériau d'enregistrement photosensible, le plan d'objet étant formé par le dispositif de génération d'image (9), le plan d'image étant formé par le matériau d'enregistrement, l'axe optique de l'objectif (12) formant avec le plan d'image un angle différent de 90° et l'orientation du plan d'objet satisfaisant à la condition de Scheimpflug.

3. Dispositif selon la revendication 1 ou 2, **caractérisé en ce que** le dispositif de génération d'image du système d'exposition numérique comporte un modulateur de lumière (9) avec un dispositif de commande (10).

4. Dispositif selon la revendication 3, **caractérisé en ce qu'**un modulateur de lumière (9) à réflexion, notamment un DMD, est utilisé.

5. Dispositif selon la revendication 3, **caractérisé en ce qu'**un modulateur de lumière (9) à transmission, notamment un LCD, est utilisé.

6. Dispositif selon la revendication 4 ou 5, **caractérisé en ce que** des LED sont prévues pour l'éclairage du modulateur de lumière (9).

7. Dispositif selon la revendication 4 ou 5, **caractérisé en ce qu'**une lampe halogène avec filtres colorés est prévue pour l'éclairage du modulateur de lumière (9).

8. Dispositif selon la revendication 1 ou 2, **caractérisé en ce que** le dispositif de génération d'image (9, 10, 11) est conçu comme un CRT ou comme un réseau LED.

9. Dispositif selon la revendication 3, **caractérisé en ce que** le dispositif de commande (10) du modulateur de lumière (9) comporte un ordinateur qui modifie un original numérique de telle sorte qu'une image déformée est générée sur le modulateur de lumière (9), la déformation étant telle que, lors de la projection de cette image sur le matériau d'enregistrement photosensible, il se forme une reproduction non déformée de l'original.

10. Dispositif selon la revendication 2, **caractérisé en ce qu'**il est placé entre le dispositif de génération d'image (9, 10, 11) et l'objectif (12) une autre optique de projection (14) qui produit une image intermédiaire prédéformée de telle sorte que, lors de la projection de l'image intermédiaire par l'objectif (12) sur le matériau d'enregistrement photosensible, il se forme une reproduction non déformée de l'original.

11. Dispositif selon la revendication 10, **caractérisé en ce qu'**une image intermédiaire virtuelle est produite comme image intermédiaire.

12. Dispositif selon la revendication 10, **caractérisé en ce qu'**il est prévu entre l'optique de projection (14) supplémentaire et l'objectif (12) un écran dépoli (15) sur lequel une image intermédiaire réelle est produite.
